(19) Europäisches Patentamt
European Patent Office
Office européen des brevets

(11) Veröffentlichungsnummer: **0 051 275**
**B1**

(12) # EUROPÄISCHE PATENTSCHRIFT

(45) Veröffentlichungstag der Patentschrift: **29.05.85**

(21) Anmeldenummer: **81109175.0**

(22) Anmeldetag: **29.10.81**

(51) Int. Cl.⁴: **C 08 G 59/24**, C 08 G 59/22, C 08 G 59/42, C 08 G 59/68, C 08 L 63/00, C 09 D 3/58, C 09 D 3/66

(54) **Reaktive härtbare Bindemittelmischung, Verfahren zur Herstellung gehärteter Produkte und Verwendung der Mischung zur Herstellung von Beschichtungen.**

(30) Priorität: **05.11.80 DE 3041653**

(43) Veröffentlichungstag der Anmeldung: **12.05.82 Patentblatt 82/19**

(45) Bekanntmachung des Hinweises auf die Patenterteilung: **29.05.85 Patentblatt 85/22**

(84) Benannte Vertragsstaaten: **AT CH DE GB LI**

(56) Entgegenhaltungen:
**EP - A - 0 002 284**
**EP - A - 0 005 868**
**DE - A - 2 741 453**
**Patents Abstracts of Japan Band 5, Nr. 114, 23. Juli 1981**

(73) Patentinhaber: **HOECHST AKTIENGESELLSCHAFT, Postfach 80 03 20, D-6230 Frankfurt am Main 80 (DE)**

(72) Erfinder: **Mondt, Josef, Dr., Altkönigstrasse 24d, D-6240 Königstein/Taunus (DE)**
Erfinder: **Walz, Gerd, Dr., Pfingstbornstrasse 99, D-6200 Wiesbaden (DE)**
Erfinder: **Wirth, Thaddäus, Dr., Kemeler Weg 6, D-6209 Heidenrod-Wisper (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 051 275 B1

BUNDESDRUCKEREI BERLIN

**Beschreibung**

Um Verarbeitungs- und Energiekosten in der Lackiertechnik zu reduzieren, besteht das Bedürfnis nach preiswerten und toxikologisch unbedenklichen Beschichtungsmitteln, die vor allem ohne Anwendung erhöhter Temperatur ausgehärtet werden können. Dies gilt vor allem für Überzüge auf Holz, Keramik, Kunststoffen und insbesondere für zu reparierende Fahrzeugkarossen.

Für derartige Anwendungen wurden bisher physikalisch trocknende Acrylatpolymerisate in Kombination mit Nitrocellulose oder Celluloseacetobutyrat sowie vernetzbare Beschichtungssysteme wie Alkydharze und Polyurethane eingesetzt. Die physikalisch getrockneten Systeme aus Acrylpolymerisaten haben den Nachteil einer ungenügenden Chemikalienbeständigkeit und Festigkeit. Bei Überzügen aus Alkydharz tritt nach Trocknung bei Raumtemperatur das Problem der ungenügenden Oberflächenhärte auf. Andererseits liefern Polyurethane Beschichtungen, die die gewünschten Eigenschaften besitzen. Sie sind jedoch teuer und die darin enthaltenen Isocyanate sind toxisch.

Es sind auch reaktive härtbare Polymerenmischungen auf der Basis von A) aliphatischen oder cycloaliphatischen Epoxydverbindungen und B) Polycarbonsäureeinheiten auf der Basis von OH-Gruppen enthaltenden oligomeren und polymeren Polymerisations- und/oder Kondensationsprodukten in Form von Polyestern oder Polymerisaten einerseits und mindestens vierbasischen Carbonsäureverbindungen andererseits bekannt.

Diese Mischungen enthalten gegebenenfalls noch Katalysatoren von unterschiedlichem chemischen Aufbau, z. B. Diazabicyclo-Verbindungen, Imidazolderivate, Trialkylamine oder dergleichen, wobei unter anderem Hydroxyde, Carbonate und Salze organischer Säuren mit Alkalimetallen wie Lithiumhydroxyd, Kaliumcarbonat, Lithiumbenzoat genannt sind. Solche Beschichtungsmischungen können schon bei Raumtemperatur polymere Netzwerke, z. B. in Form von Filmen bilden, die zufriedenstellende Eigenschaften aufweisen. Daher bedeuten diese Mischungen einen erheblichen Fortschritt in der angestrebten Richtung.

In diesen bekannten Mischungen zeigen aber die oben angeführten Katalysatoren entweder nur geringe katalytische Wirksamkeit bei Raumtemperatur oder es treten Schwierigkeiten bezüglich Verträglichkeit, Einarbeitung oder hinsichtlich der Lagerstabilität der Mischungen auf.

Es war daher erwünscht, die Eigenschaften der aus diesen Mischungen erhaltenen Produkte noch zu verbessern.

Es wurde auch schon vorgeschlagen, Mischungen aus Polyepoxyden und monofunktionellen Carbonsäuren ein aktives Chrom-III-tricarboxylat als Katalysator beizumischen. Derartige Mischungen zeigen zwar schon bei Raumtemperatur hohe katalytische Wirksamkeit, sie sind jedoch aufgrund ihrer intensiv dunklen Eigenfarbe nicht für Überzüge und insbesondere nicht für Klarlacke geeignet. Außerdem werden diese Katalysatoren bei erhöhter Luftfeuchtigkeit relativ rasch desaktiviert.

Gegenstand der Erfindung ist eine reaktive härtbare Bindemittelmischung auf der Basis von A) aliphatischen und/oder cycloaliphatischen Epoxydverbindungen, B) Polycarbonsäureeinheiten auf der Basis von einem oligomeren und/oder polymeren Polymerisations- und/oder Kondensationsprodukt mit ursprünglich freien OH-Gruppen der Gruppe Polyester und Polymerisate, das über eine Estergruppe mit einer carbocyclischen Polycarbonsäure so verbunden ist, daß sich in o-Stellung zu dieser Esterbindung noch eine freie COOH-Gruppe am Säurerest befindet, und C) einer Katalysatorkomponente in Form von Alkali- und/oder Erdalkalisalzen, die dadurch gekennzeichnet ist, daß die Komponente

A) in Form von aliphatischen und/oder solchen cycloaliphatischen Polyepoxyden, in denen mindestens zwei epoxydierte cycloaliphatische Reste über eine aliphatische Brücke, die mindestens eine Estergruppe enthalten und/oder einen Äthersauerstoff enthalten kann, miteinander verbunden sind, vorliegt,

B) eine Verbindung der Formel I (siehe Anspruchs 1) mit einer Säurezahl von 30 bis 400, vorzugsweise 40 bis 300

ist, worin

$R^1$ den Rest eines OH-Gruppen enthaltenden Polymerisations- und/oder Kondensationsprodukts der Gruppe Polyester und Polymerisate und

$R^2$ den Rest einer zweibasischen carbocyclischen Carbonsäure mit einer in o-Stellung zur Esterbindung befindlichen COOH-Gruppe bedeuten, und

C) eine Verbindung der Formel II (siehe Anspruch 1) darstellt, worin

$R^3$ den Rest eines Homo- und/oder Copolymerisats einer ungesättigten Carbonsäure mit einer statistisch verteilten Anzahl von COOH-Seitengruppen oder den Rest eines Polyesters mit ursprünglich freien COOH-Gruppen und

Me ein Äquivalent eines in Salzform vorliegenden Alkali- oder Erdalkalimetalls

bedeuten.

Mit den erfindungsgemäßen Mischungen lassen sich Produkte herstellen, die überraschenderweise besonders günstige physikalische und chemische Eigenschaften zeigen.

Geeignete Polyepoxydverbindungen A) mit zwei oder mehr Epoxydgruppen pro Molekül sind solche, welche zweckmäßig ein Epoxydäquivalentgewicht von 80 bis 500, vorzugsweise 120 bis 300 aufweisen. Als aliphatische Polyepoxydverbindungen werden z. B. genannt Polyepoxydalkane mit einer C-Zahl von 4 bis 20, vorzugsweise 4 bis 12, epoxydierte Fettsäureester, wie epoxydiertes Leinöl, epoxydiertes Sojaöl, epoxydierte Polybutadien- und Isoprenöle. Geeignete cycloaliphatische Epoxydverbindungen sind z. B. epoxydierte Cyclohexen- und/oder Cyclopentenderivate der Formeln III bis VI (s. Formelblatt).

Gegebenenfalls können auch Monoepoxyde als reaktive Verdünner zum Einsatz kommen. Geeignete Monoepoxyde sind z. B. Olefinoxyde, wie Octylenoxyd, Butylglycidyläther, Allylglycidyläther, Phenylglycidyläther, p-Butylphenolglycidyläther, Styroloxyd, Glycidylmethacrylat, Cyclohexenvinylmonooxyd, Dipentenmonooxyd, $\alpha$-Pinenoxyd, Glycidyläther von tert. Monocarbonsäuren.

Unter den genannten Epoxydverbindungen reagieren insbesondere cycloaliphatische sehr leicht mit den Polycarbonsäureeinheiten B) unter Bildung dreidimensionaler Polymernetzwerke. In vielen Fällen erhält man mit diesen Epoxydverbindungen bereits bei Raumtemperatur, z. B. bei 20°C, eine Vernetzung. Eine bevorzugte Ausführungsform der Erfindung liegt aber in der Kombination mit cycloaliphatischen Epoxydverbindungen, z. B. solchen der Formeln III bis IV (siehe Formelblatt) mit epoxydierten Fettsäureestern und/oder Polyepoxydalkanen. Das Gewichtsverhältnis der cycloaliphatischen zu den aliphatischen Epoxydverbindungen kann darin z. B. 1 : 10 bis 10 : 1, vorzugsweise 5 : 1 bis 1 : 5, betragen.

Der Begriff »OH-Gruppen enthaltende Polymerisations- und/oder Kondensationsprodukte« umfaßt auch die Oligomeren. Wird die Komponente B) aus einem Polyester gebildet, können diese in an sich bekannter Weise aus bekannten Polycarbonsäuren, wie Phthalsäure, Isophthalsäure, Terephthalsäure, Halogenphthalsäure, Adipinsäure, Sebacinsäure, Fumarsäre, Maleinsäure, Endomethylentetrahydrophthalsäure und deren Hexachlorderivaten, Trimellithsäure, gegebenenfalls zusammen mit Monocarbonsäuren wie Benzoesäure, Butylbenzoesäure, Laurinsäure, Isononansäure, Fettsäuren natürlich vorkommender Öle bzw. aus Gemischen oder Anhydriden der genannten Säuren, sofern diese existieren, hergestellt sein. Geeignete Alkoholkomponenten dieser Polyester sind z. B. mehrwertige Alkohole wie Äthylenglykol, die Propandiole, Butandiole, Pentandiole wie Neopentylglykol, Hexandiole, Diäthylenglykol, Cyclohexyldimethanol, Trimethylpentandiol, Trimethyloläthan oder -propan, Glycerin, Pentaerythrit, Dipentaerythrit, gegebenenfalls zusammen mit einwertigen Alkoholen wie Butanol Octanol, Laurylalkohol, Linoleylalkohol oder dergleichen, jeweils einzeln oder im Gemisch.

Die Polyester der Komponente B) können durch mindestens teilweisen chemischen Abbau von hochmolekularen Polyestern aromatischer Natur, wie Terephthalsäure-Äthylenglykol- oder -Butandiol-polyestern, Isophthalsäure-Äthylenglykol- oder Hexandiol-polyestern, unter Einwirkung von ein- und/oder mehrwertigen Alkoholen, Estern, Dicarbonsäuren oder dergleichen entstanden sein. Bei etwa erfolgter Umsetzung mit einwertigen Alkoholen können diese im Unterschuß umgesetzt worden sein.

Als Hydroxylgruppen enthaltende, den Rest $R^1$ bildende weitere Verbindungen kommen beispielsweise in Frage Polymerisationsharze in Form von Polyvinylalkohol. Geeignet sind aber vor allem Polymerisationsprodukte, die in bekannter Weise durch Homo- oder Copolymerisation von Hydroxyalkylacrylaten bzw. -methacrylaten bzw. Maleinaten mit olefinisch ungesättigten Monomeren, z. B. Styrol, $\alpha$-Methylstyrol, den verschiedenen Vinyltoluolen, Acryl- oder Methacrylsäurealkylestern, Acrylnitril, N-Methylolacrylamid, Allylverbindungen hergestellt sind.

Ein derartiges Acrylpolymeres kann in üblicher Weise z. B. durch Radikalpolymerisation hergestellt worden sein, wobei die Monomeren in Lösung oder in Substanz polymerisiert sein können. Als Lösungsmittel für die Polymerisation z. B. sind aromatische Kohlenwasserstoffe wie Toluol oder Xylol, Ester wie Äthylacetat, Butylacetat oder Äthylglykolacetat jeweils allein oder in Kombination geeignet. Gegebenenfalls kann in Anwesenheit von Initiatoren wie Azobisverbindungen, beispielsweise Azobisisobutyronitril, Azobiscyclohexannitril, Peroxyden wie Benzoylperoxyd, di-tert. Butylperoxyd und in Anwesenheit von Kettenübertragungsmitteln, wie Mercaptanen, Dodecylmercaptan oder Thioglykolsäure polymerisiert werden.

Geeignete Säuren, die den Rest $R^2$ der Komponente B) in Formel I bilden, sind z. B. Phthalsäure, Tetra- und Hexahydrophthalsäure und deren Derivate, insbesondere die entsprechenden Endoalkylen-, insbesondere Endomethylenverbindungen, z. B. Endomethylentetrahydrophthalsäure sowie — gegebenenfalls in untergeordneter Menge — die Halogensubstitutionsprodukte dieser Säuren.

Zweckmäßig beträgt das Verhältnis von Gesamtepoxydäquivalenten der Komponente A) zu den freien COOH-Gruppen der Komponente B) 1 : 5 bis 5 : 1, vorzugsweise 0,5 : 1 bis 2 : 1.

In der Katalysatorkomponente C) gemäß Formel II ist $R^3$ zweckmäßig ein Homo- und/oder Copolymerisat ungesättigter Mono- und/oder Dicarbonsäuren mit 3 bis 5 C-Atomen, z. B. von Acryl- oder Methacrylsäure, Maleinsäure, Fumarsäure, Itaconsäure, deren Halogensubstitutionsprodukten wie Chloracrylsäure, jeweils einzeln oder im Gemisch, gegebenenfalls mit weiteren copolymerisierbaren Monomeren, wie Estern, einschließlich Halbestern, Amiden, Nitrilen dieser Säuren, Vinylaromaten,

wie Styrol, den verschiedenen Vinyltoluolen, $\alpha$-Methylstyrol oder dergleichen. Diese Polymerisate können nach den bekannten Verfahren der Polymerisationstechnik, z. B. der radikalischen Polymerisation in Lösung, hergestellt worden sein. Die Säurezahl des Homo- oder Copolymerisats $R^3$ kann z. B. 10 bis 500, vorzugsweise 50 bis 300 betragen. Es ist z. B. auch möglich, Maleinsäure-Styrol-Telomerisate oder solche Polymerisate, in denen die Dicarbonsäuren als Halbester vorliegen, zu verwenden.

Zur Salzbildung für den Rest Me in der Komponente C) eignen sich z. B. Natrium, Kalium, Calcium, insbesondere jedoch Lithium, jeweils einzeln oder im Gemisch. Falls Erdalkalimetalle in Frage kommen, wird man solche Katalysatoren in geringerer Menge einsetzen. Der Katalysator C) kann z. B. durch Umsetzung von Lithiumhydroxyd oder Lithiummethylat mit den COOH-Gruppen des jeweils gewünschten Polymeren hergestellt werden. Es ist aber auch möglich, daß eine monomere ungesättigte Carbonsäure, z. B. Acrylsäure, zuerst in das entsprechende Metallsalz übergeführt und dann durch Homo- oder Copolymerisation in das Polymerisat umgewandelt wird.

Der Metallgehalt des Katalysators C) liegt im allgemeinen bei 1 bis 30, vorzugsweise 5 bis 20 Gew.-%. Der Anteil der Komponente C) beträgt im allgemeinen 0,5 bis 50, vorzugsweise 1 bis 20 Gew.-%, bezogen auf Komponente B). Mit besonderem Vorteil wird die Komponente C) in einem solchen Anteil eingesetzt, daß der Metallanteil, bezogen auf Komponente B), 0,02 bis 0,2 Äquivalent-% beträgt.

In der Regel werden die metallhaltigen Katalysatoren in Form ihrer Lösungen, z. B. 50%ig in Äthylenglykolmonoäthylätheracetat, den erfindungsgemäßen Mischungen, und zwar vor der Verarbeitung, zugesetzt. Doch ist es auch möglich, die polymeren Katalysatoren der Polycarbonsäurekomponente (B) vor dem Vermischen mit der Epoxydkomponente (A) zuzusetzen.

Gegebenenfalls können der Mischung auch weitere übliche Zusätze und Hilfsstoffe wie Pigmente, Füllstoffe, Verlaufmittel, Benetzungsmittel, Stabilisatoren oder dergleichen sowie Lösungsmittel zugesetzt werden. Hierfür geeignete Lösungsmittel sind beispielsweise Toluol, Xylol, Butanol, Äthylacetat, Butylacetat, Äthylenglykoldiacetat, Äthylenglykolmonoäthyl- oder -butyläther oder deren Acetate, Äthylenglykoldimethyläther, Diäthylenglykoldimethyläther, Aromaten enthaltende Benzine, Cyclohexanon, Methyläthylketon, Aceton, Isophoron, Acetoxyglykolsäureäthyl- oder -butylester, jeweils einzeln oder im Gemisch. In vielen Fällen ist es auch möglich, diese Lösungsmittel mit jeweils bis zu 50% an Lackbenzinen, die arm an oder frei von Aromaten sind, zu vermischen.

Im allgemeinen lassen sich die erfindungsgemäßen Mischungen bei — 30 bis 350, vorzugsweise 0 bis 180, insbesondere 0 bis 80° C härten.

Die Herstellung der Beschichtungsmischungen durch Mischen der drei Komponenten erfolgt zweckmäßig unmittelbar vor ihrer Verwendung, z. B. vor ihrem Auftragen auf eine Unterlage. Es ist beispielsweise möglich, eine Mischung der Polycarbonsäurekomponente B) mit den gewünschten Pigmenten, weiteren Zusatzstoffen und Lösungsmittel zu versetzen und diese Lösung mit den beiden übrigen Komponenten A) und C) zu vereinigen. Andererseits besteht auch die Möglichkeit, aus den Komponenten B) und C), sofern diese miteinander verträglich sind, gegebenenfalls auch mit weiteren Zusatzstoffen, ein Gemisch herzustellen, das eine bestimmte Zeitlang lagerstabil ist. Dasselbe gilt auch für ein Gemisch der Komponenten A) und C), dem die dritte Komponente später zugegeben wird. In der Regel wird man jedoch alle drei Komponenten gleichzeitig miteinander vermischen.

Mit den erfindungsgemäßen Mischungen, die eine ausgezeichnete Stabilität gegenüber UV-Strahlung aufweisen, können unpigmentierte, pigmentierte oder mit anderen Füllstoffen versehene Beschichtungssysteme, z. B. Lacke, hergestellt werden. Der auf eine Unterlage aufgebrachte Film kann durch einfaches Liegenlassen bei Raumtemperatur oder bei wenig erhöhter Temperatur, z. B. zwischen Raumtemperatur und 80°C vollständig aushärten. In einzelnen Fällen ist es auch möglich, die Härtung bei noch höheren Temperaturen, z. B. 2 Minuten/300° C vorzunehmen, doch tritt im allgemeinen schon bei den niederen Temperaturen eine ausreichende Härtung ein.

Die erfindungsgemäßen Beschichtungsmittel lassen sich auf die verschiedensten Unterlagen aufbringen, wie Keramik, Holz, Glas, Beton, Kunststoffe, vorzugsweise Metall, wie Eisen, Zink, Titan, Kupfer, Aluminium, Stahl, Messing, Bronze, Magnesium oder dergleichen. Die Unterlagen können gegebenenfalls noch durch geeignete mechanische und/oder chemische Vorbehandlung haftfreudiger bzw. korrosionsbeständiger gemacht werden. Jedoch haften die erfindungsgemäßen Überzugsmittel ausgezeichnet auf den verschiedensten Metallunterlagen ohne haftvermittelnde Grundierung bzw. Zwischenschicht. Die gute Haftung dieser Lackierungen entspricht den Werten GT 0A bis GT 1A nach den Prüfvorschriften gemäß DIN 53 151. Außerdem lassen sich diese Überzüge sehr gut verformen, weisen hohe Wetterbeständigkeit und ausgezeichnete chemische Beständigkeit auf.

Die erfindungsgemäßen Beschichtungsmittel sind für die Herstellung von korrosionsschützenden Überzügen und/oder Zwischenbeschichtungen für die verschiedensten Anwendungsgebiete geeignet, insbesondere als resistente glänzende Lackierungen und Mattlackierungen. Weiter eignen sie sich für die Beschichtung und Auskleidung von Gegenständen, die mit Treibstoffen und Lösungsmitteln in Berührung kommen, außerdem für Schutzüberzüge gegen atmosphärische Einflüsse, wie Straßenmarkierungen, Bauteile für elektrotechnische Zwecke bzw. deren Elemente, insbesondere für elektrische Leiter, sowie für Beschichtungen von thermisch beanspruchten Gegenstände.

Aufgrund ihrer günstigen Eigenschaften sind die erfindungsgemäßen Überzugsmittel auch hervorragend für die Einschichtlackierung geeignet. Je nach Wahl der Komponente A) können mit den

erfindungsgemäßen Überzugsmitteln beschichtete Bleche nachträglich durch Tiefziehen, Abkanten, Profilieren, Prägen oder dergleichen ohne nennenswerte Beeinträchtigung der übrigen günstigen Eigenschaften verformt werden. Die haftende Überzugsschicht kann unverändert bleiben, sie kann aber auch als Zwischenschicht, also als Unterlage für weitere Überzüge dienen, die wiederum aus demselben oder einem anderen üblichen Beschichtungsmaterial bestehen können.

Die erhaltenen Überzüge stellen Filme mit ausgezeichneter mechanischer und chemischer Beständigkeit und mit guter Wetterstabilität dar. Für Mattlacke ist überraschenderweise kein hoher Anteil an Pigmenten und Füllstoffen erforderlich.

Überraschenderweise hat es sich gezeigt, daß die erfindungsgemäßen Überzüge besonders hinsichtlich ihrer Beständigkeit gegen chemische und atmosphärische Einflüsse sowie in bezug auf Härte und Glanz ausgewogene Eigenschaften zeigen. So wurde vor allem festgestellt, daß sich die erfindungsgemäßen Mischungen auch als Metallic-Lacke bei dem sogenannten »Florida-Test« ausgezeichnet bewährt haben. Die gute chemische Beständigkeit zeigt sich vor allem gegenüber Wasser, Lösungsmitteln, alkalischen und sauren Substanzen. Die Ausgewogenheit der Filmeigenschaften bezüglich Härte, Elastizität, Wetterbeständigkeit der Überzüge aus den erfindungsgemäßen Mischungen wird vorzugsweise in der gezielten Kombination aliphatischer und cycloaliphatischer Epoxydverbindungen erzielt.

Die erfindungsgemäßen Mischungen lassen sich daher vor allem für Metalleffektlackierungen mit hoher Wetterbeständigkeit verwenden.

In den folgenden Beispielen sind T Gewichtsteile und % Gewichts-%. Der Feststoffgehalt wurde jeweils nach DIN 53 183, die Säurezahl (SZ) nach DIN 53 402, die Jodfarbzahl nach DIN 6162 und die Hydroxylzahl (OHZ) nach DIN 53 783 bestimmt. Das Lösungsmittel Äthylenglykolmonoäthylätheracetat wird im folgenden kurz als »Äthylglykolacetat« bezeichnet.

## Beispiele

### I. Herstellung der Polycarbonsäure-Komponente B)

a) In einem Rührer, Rückflußkühler und Thermometer ausgerüsteten Reaktor werden 2285 T Xylol, 2285 T Äthylglykolacetat und 1890 T eines Gemisches von $\alpha,\alpha$-Dialkylalkan-monocarbonsäure ($C_{9-11}$)-Glycidylestern auf 130°C erhitzt und ein Gemisch aus 2985 T Styrol, 480 T Methylmethacrylat, 1385 T Hydroxyäthylmethacrylat, 583 T Acrylsäure und 50 T Di-t-Butylperoxyd in fünf Stunden gleichmäßig anteilweise zugegeben. Aus einem zweiten Gefäß wird eine Lösung von 75 T Laurylmercaptan in 400 T Xylol parallel zur Monomerenmischung zugegeben. Dann wird noch sechs Stunden bei 140°C nachgerührt. Die Polymerisatlösung wird dann auf 130°C abgekühlt und es werden 2340 T Phthalsäureanhydrid und 22 T Diazabicyclooctan in fester Form zugesetzt. Zur Veresterung wird zwei Stunden bei 130°C gerührt und nach der Verdünnung mit 1700 T Äthylglykolacetat weitere zwei Stunden bei 120°C nachgerührt. Kenndaten: Feststoffgehalt 60%; SZ ($H_2O$) 136; SZ(Alkohol) 130; Jodfarbzahl 2 bis 3.

b) In einer Apparatur nach a) werden 1575 T Xylol, 1575 T Äthylglykolacetat und 1200 T des Glycidylesters wie nach a) auf 130°C erhitzt. Dann wird ein Gemisch aus 260 T Styrol, 1500 T Methylmethacrylat, 1320 T Hydroxypropylmethacrylat, 370 T Acrylsäure und 35 T Di-t-Butylperoxyd anteilweise über fünf Stunden zugegeben. Aus einem zweiten Gefäß werden parallel zur Monomerenmischung noch 50 T Laurylmercaptan anteilweise zugegeben. Dann wird noch sechs Stunden bei 140°C nachgerührt.

Nach Abkühlung auf 130°C werden der Polymerenlösung noch 2020 T Tetrahydrophthalsäureanhydrid und 20 T Diazabicyclooctan in fester Form zugesetzt. Diese Mischung wird noch zwei Stunden bei 130°C und nach der Verdünnung mit 1430 T Äthylglykolacetat weitere zwei Stunden bei 120°C nachgerührt. Kenndaten: Feststoffgehalt 60%; SZ(Alkohol) 132; SZ($H_2O$) 145; Jodfarbzahl 2.

c) Zu einer 60%igen Polyesterlösung in Xylol/Äthylglykolacetat (2 : 1), hergestellt aus 525 T Trimethylolpropan, 1150 T Neopentylglykol und 1950 T Phthalsäureanhydrid mit einer Säurezahl von ca. 14 werden bei 140°C 1016 T Phthalsäureanhydrid in Gegenwart von 2 T 2 Phenylimidazolin gegeben. Die Mischung wird drei Stunden bei 140°C gerührt und anschließend mit Äthylglykolacetat auf 60% Feststoffgehalt verdünnt. Kenndaten: SZ ($H_2O$) 105, Jodfarbzahl 1.

### II. Herstellung der Katalysator-Komponente

d) In einer Apparatur nach a) werden 150 T Xylol und 150 T Äthylglykolacetat auf 140°C, erwärmt. Dann werden unter Rühren 100 T Styrol, 260 T Methylmethacrylat, 72 T Acrylsäure, 30 T Butylacrylat, 12 T Di-tert.-Butylperoxyd und 6 T Laurylmercaptan zudosiert. Nach beendeter Zugabe wird noch 6 Stunden bei 140°C nachgerührt. Der Ansatz wird auf 80°C abgekühlt und dann wird eine Stunde lang eine Lösung aus 560 T Kaliumhydroxyd, 10%ig in Methanol, anteilweise zugegeben.

Das Reaktionsgemisch wird noch eine Stunde bei 80°C nachgerührt. Dann wird das Methanol unter vermindertem Druck entfernt. Die Harzlösung wird mit 50 T Äthylglykolacetat bis zu einem Festkörpergehalt von 60% verdünnt. SZ ($H_2O$) 10, Jodfarbzahl 2.

e) In einer Apparatur nach a) werden 150 T Xylol und 150 T Äthylglykolacetat unter Rühren auf 130° C erwärmt. Dann wird über fünf Stunden eine Mischung aus 260 T Styrol, 60 T Methylmethacrylat, 72 T Acrylsäure. 70 T Butylacrylat, 12 T Di-t-Butylperoxyd und 5 T Laurylmercaptan anteilweise zugegeben. Anschließend wird bei 140° C noch sechs Stunden nachgerührt. Der Ansatz wird dann auf 80° C abgekühlt und man gibt 380 T einer 10%igen methanolischen Lithiummethylat-Lösung in Methanol über eine Stunde anteilweise zu. Bei 80° C wird eine Stunde nachgerührt. Das Methanol wird mit einem Verdampfer unter vermindertem Druck entfernt und die Harzlösung wird mit 60 T Äthylglykolacetat verdünnt. Kennzahlen: Feststoffgehalt 60%; SZ ($H_2O$) 40; Jodfarbzahl 3.

f) In einer Apparatur nach a) werden 150 T Xylol und 150 T Äthylglykolacetat auf 140° C erwärmt. Dann werden unter Rühren 60 T Styrol, 300 T Methylmethacrylat, 72 T Acrylsäure, 30 T Butylacrylat, 12 T Di-t-butylperoxyd, und 6 T Laurylmercaptan zudosiert. Danach wird sechs Stunden bei 140° C nachgerührt. Der Ansatz wird auf 80° C abgekühlt. Dann gibt man während einer Stunde eine Lösung aus 420 T Lithiumhydroxyd-Monohydrat (10%ig) in Methanol anteilweise zu. Das Reaktionsgemisch wird noch eine Stunde bei 80° C nachgerührt und darauf unter vermindertem Druck das Methanol mit einem Verdampfer entfernt. Die Harzlösung wird mit 50 T Äthylglykolacetat verdünnt. Kennzahlen: Feststoffgehalt 60%; SZ ($H_2O$) 11; Jodfarbzahl 1 bis 2.

## III. Herstellung der Polymerenmischung

Aus den Komponenten A), B) und C) werden die erfindungsgemäßen Mischungen gemäß Tabelle 1 hergestellt. Die Typen a) bis f) entsprechen den vorstehend unter I. und II. geschilderten, die für Komponente A angegebenen Formeln entsprechen dem Formelblatt.

Tabelle 1

| | Beispiel<br>1 | 2 | 3 |
|---|---|---|---|
| Polycarbonsäureeinheit (B) | 166,6 T Typ b)<br>60%ig; SZ $H_2O$ = 145 | 321,7 T Typ b)<br>60%ig; SZ $H_2O$ = 145 | 103,7 T Typ c)<br>60%ig; SZ = 105 |
| Epoxydharzkomponente (A) | 42,7 T einer Mischung aus<br>4,8 T Verbindung III+)<br>1,9 T epoxydiertes Sojaöl<br>Gesamt — EÄG = 181 | 116,2 T einer Mischung aus<br>4,8 T Verbindung IV+○)<br>4,9 T Verbindung III+)<br>1,6 T epoxydiertes Leinöl<br>0,5 T epoxydiertes Sojaöl<br>Gesamt — EÄG = 197 | 14,7 T einer Mischung aus<br>0,9 T einer Verbindung VI<br>1,1 T epoxydiertes Polybutadienöl<br>Gesamt — EÄG = 154 |
| Katalysatorkomponente (C) | 25 T Typ e) 60%ig | 41,1 T Typ f) 60%ig | 8,5 T Typ e) 60%ig |

+) ... $R^4 = R^5 = H$
○) ... $R^6 = -(CH_2)_4-$
EÄG = Epoxydäquivalentgewicht

Tabelle 1 (Fortsetzung)

| | Beispiel 4 | 5 | 6 |
|---|---|---|---|
| Polycarbonsäureeinheit (B) | 211,3 T Typ c) 60%ig; SZ $H_2O$ = 105 | 155,7 T Typ a) 60%ig; SZ $H_2O$ = 136 | 108,7 T Typ a) 60%ig; SZ = 136 |
| Epoxydkomponente (A) | 42,1 T einer Mischung aus 1,2 T Verbindung IV+○) 2,8 T Verbindung III+) 0,9 T epoxydiertes Sojaöl 1,1 T epoxydiertes Leinöl Gesamt – EÄG = 177 | 33,6 T einer Mischung aus 2,06 T Verbindung III+) 1,15 T epoxydiertes Leinöl 0,95 T epoxydiertes Sojaöl Gesamt – EÄG = 167 | 28,7 T einer Mischung aus 1,3 T Verbindung III+) 2,2 T epoxydiertes Leinöl Gesamt – EÄG = 167 |
| Katalysatorkomponente (C) | 23,2 T Typ e) 60%ig | 17 T Typ e) 60%ig | 11 T Typ e) 60%ig |

+) ... $R^4 = R^5 = H$
○) ... $R^6 = -(CH_2)_4-$

Tabelle 1 (Fortsetzung)

| | Beispiel 7 | 8 |
|---|---|---|
| Polycarbonsäureeinheit (B) | 176,3 T Polymer Typ a) 60%ig; SZ $H_2O$ = 136 | 298,5 T Polymer Typ a) 60%ig; SZ $H_2O$ = 136 |
| Epoxydharzkomponente (A) | 23,2 T einer Mischung aus 9,5 T Verbindung III++) 0,9 T Polybutadien, epoxydiert 1,1 T Sojaöl, epoxydiert Gesamt – EÄG = 172 | 98,5 T einer Mischung aus 2,09 T Verbindung III+) 1,98 T Verbindung IV+○) 3,46 T epoxydiertes Leinöl Gesamt – EÄG = 175 |
| Katalysatorkomponente (C) | 12,3 T Typ f) 60%ig | 31,2 T Polymer Typ f) 60%ig |

++) ... $R^4 = R^5 = -CH_3$
+) ... $R^4 = R^5 = H$
○) ... $R^6 = -(CH_2)_4-$

IV) Lacktechnische Prüfung

Die erfindungsgemäßen Mischungen wurden mit Titandioxyd im Verhältnis Gesamtbindemittel : Titandioxyd = 1 : 1 pigmentiert und mit einem Lösungsmittel (Xylol/Äthylglykolacetat 1 : 1) auf eine Auslaufzeit von 60 bis 80 Sekunden im 4-mm-DIN-Becher verdünnt. Dann wurde die Mischung mit einem Aufziehdreieck auf Glasplatten aufgebracht. Die Schichtdicke des Films betrug 25 bis 30 µm (Trockenschichtdicke).

Zur Bestimmung der Erichsen-Tiefung wurde die Mischung auf geschliffene Stahlbleche aufgebracht. Auch hier hatte der Film eine Schichtdicke von 25 bis 30 µm (Trockenschichtdicke).

Zur Bestimmung der Klebfreitrocknung wurden Reflexionsperlen mit einem Durchmesser von 0,1 bis

0,4 mm mittels einer Pipette über eine Breite von 5 mm auf den Lackfilm aufgetragen. Danach wurde die mit dem Lack beschichtete Glasplatte schräg gestellt und abgeklopft. Wenn alle Perlen abfielen, war der Film klebfrei.

Die Ergebnisse der lacktechnischen Prüfung sind in Tabelle 2 für unterschiedliche Härtungsbedingungen zusammengestellt. Darin bedeuten a) die Härtung bei Raumtemperatur und b) eine 30 Minuten lange Härtung bei 100° C. Die Pendelhärte, Xylolbeständigkeit und Kratzfestigkeit wurden jeweils nach 1, 7 und 14 Tagen ermittelt.

Bei der Bestimmung der Kratzfestigkeit bedeutet 0 den besten Wert und 5 den schlechtesten Wert.

## Florida-Bewitterung

Außerdem wurde eine 12monatige Florida-Bewitterung mit 2 Proben durchgeführt. Dabei wurden Metalleffektlacke mit einer Klarlackdeckschicht auf jeweils einer Mischung nach Beispiel 6 und 8 geprüft. Die Grundschicht bestand aus einem Gemisch aus 10,5 T ölfreiem Polyester und 11,2 T Celluloseacetobutyrat mit 5 T Aluminiumpigment. Die Mischung wurde mit einem Lösungsmittelgemisch aus Xylol, Butylacetat und Äthylenglykolmonobutyläther (2 : 7 : 1) auf eine Auslaufzeit von 15 Sekunden im 4-mm-DIN-Becher verdünnt. Zunächst wurde die Grundschicht in einer Naßschichtdicke von ca. 100 μm aufgebracht und nach 3 Minuten erfolgte der Auftrag der Deckschicht. Der Überzug wurde durch 14 Tage langes Liegenlassen bei Raumtemperatur gehärtet.

Die Ergebnisse sind in Fig. 1 dargestellt. Darin ist die Reflexion der Lacke in % in Abhängigkeit von der Bewitterungszeit aufgetragen.

Kurve 1 stellt die Ergebnisse der Proben nach Beispiel 6 und Kurve 2 die Ergebnisse der Proben nach Beispiel 8 dar.

| | nach Tagen | Beispiel 1 a | 1 b | 2 a | 2 b | 3 a | 3 b | 4 a | 4 b | 5 a | 5 b | 6 a | 6 b | 7 a | 7 b | 8 a | 8 b |
|---|---|---|---|---|---|---|---|---|---|---|---|---|---|---|---|---|---|
| Klebfreitrocknung (min) | | 36 | | 40 | | 45 | | 39 | | 32 | | 25 | | 40 | | 35 | |
| Pendelhärte | 1 | 89 | 115 | 95 | 118 | 79 | 102 | 85 | 119 | 75 | 114 | 92 | 120 | 78 | 108 | 82 | 115 |
| | 7 | 169 | 182 | 175 | 181 | 153 | 166 | 160 | 169 | 150 | 179 | 172 | 180 | 165 | 169 | 169 | 179 |
| | 14 | 189 | 188 | 185 | 186 | 178 | 180 | 190 | 195 | 189 | 195 | 193 | 198 | 187 | 197 | 185 | 199 |
| Xylolbeständigkeit nach (min) | 1 | 1 | 11 | 2 | 10 | < 1 | 9 | < 1 | 13 | < 1 | 10 | < 1 | 15 | < 1 | 12 | < 1 | 11 |
| | 7 | 65 | 80 | 83 | 85 | 52 | 60 | 45 | 59 | 52 | 89 | 60 | 95 | 68 | 90 | 70 | 80 |
| | 14 | > 120 | > 120 | > 120 | > 120 | > 120 | > 120 | > 120 | > 120 | > 120 | > 120 | > 120 | > 120 | > 120 | > 120 | > 120 | > 120 |
| Kratzfestigkeit nach | 1 | 5 | 4 | 4 | 2 | 5 | 4 | 5 | 3 | 5 | 3 | 4 | 2—3 | 4 | 2 | 5 | 3 |
| | 7 | 2 | 0 | 0 | 0 | 3 | 0 | 2 | 0 | 3 | 0 | 2 | 0 | 3 | 0 | 2 | 0 |
| | 14 | 0 | 0 | 0 | 0 | 0 | 0 | 0 | 0 | 0 | 0 | 0 | 0 | 0 | 0 | 0 | 0 |
| Erichsen Tiefung nach (min) | 14 | 8,0 | 8,3 | 7,8 | 7,2 | 9,7 | 9,6 | 8,9 | 8,1 | 9,8 | 9,1 | 9,2 | 9,0 | 8,3 | 8,4 | 9,8 | 9,2 |
| Glanz nach Lange 60° Winkel | 14 | 91 | 90 | 92 | 93 | 91 | 92 | 92 | 92 | 95 | 93 | 92 | 93 | 94 | 93 | 95 | 95 |

## V) Diskussion der Ergebnisse

Wie aus Tabelle 2 ersichtlich, zeigen alle Proben auch beim Härten bei Raumtemperatur nach 14 Tagen eine einwandfreie Beschaffenheit, insbesondere bezüglich Oberflächenhärte, Kratzfestigkeit, Glanz und chemischer Beständigkeit. Diese Eigenschaften lassen sich somit durchaus mit denjenigen vergleichen, die unter den Härtungsbedingungen b), d. h. durch Einbrennen während 30 Minuten bei 100° C erhalten wurden.

Aus Fig. 1 ist ersichtlich, daß die erfindungsgemäßen Mischungen eine ausgezeichnete Bewitterungsbeständigkeit aufweisen, so daß man auch nach einem Jahr noch eine Reflexion von mindestens 75% des ursprünglichen Werts erhält.

## Formelblatt

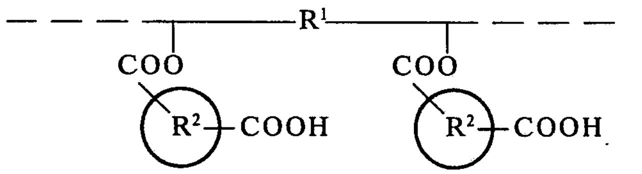

(I)

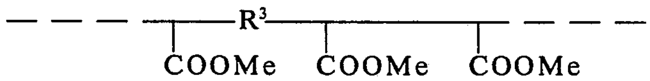

(II)

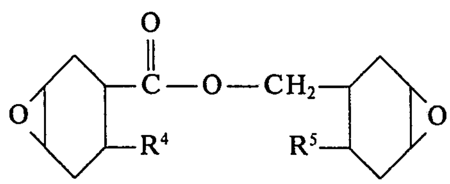

(III)

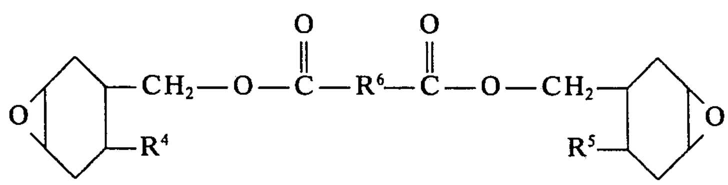

(IV)

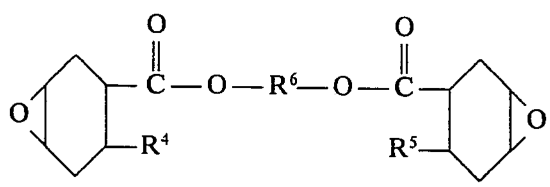

(V)

$R^4$, $R^5$ = H, $-CH_3$

$R^6$ = $-(CH_2)_n-$

n = 1 bis 6

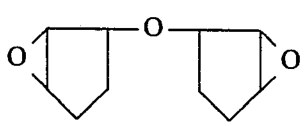

(VI)

**Patentansprüche**

1. Reaktive härtbare Bindemittelmischung auf der Basis von

A) aliphatischen und/oder cycloaliphatischen Epoxydverbindungen,
B) Polycarbonsäureeinheiten auf der Basis von einem oligomeren und/oder polymeren Polymerisations- und/oder Kondensationsprodukt mit ursprünglich freien OH-Gruppen der Gruppe Polyester und Polymerisate, das über eine Estergruppe mit einer carbocyclischen Polycarbonsäure so verbunden ist, daß sich in o-Stellung zu dieser Esterbindung noch eine freie COOH-Gruppe am Säurerest befindet und
C) einer Katalysatorkomponente in Form von Alkali- und/oder Erdalkalisalzen,

dadurch gekennzeichnet, daß die Komponente

A) in Form von aliphatischen und/oder solchen cycloaliphatischen Polyepoxyden, in denen mindestens 2 epoxydierte cycloaliphatische Reste über eine aliphatische Brücke, die mindestens eine Estergruppierung oder einen Äthersauerstoff enthalten kann, miteinander verbunden sind, vorliegt,
B) eine Verbindung mit einer Säurezahl von 30 bis 400 der Formel

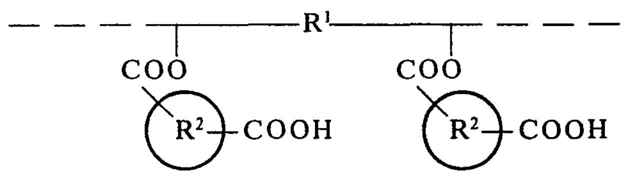

(I)

ist, worin

$R^1$ den Rest eines OH-Gruppen enthaltenden Polymerisations- und/oder Kondensationsprodukts der Gruppe Polyester und Polymerisate und
$R^2$ den Rest einer zweibasischen carbocyclischen Carbonsäure mit einer in o-Stellung zur Esterbindung befindlichen COOH-Gruppe

bedeuten, und

C) eine Verbindung der Formel

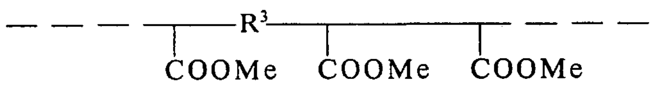

(II)

darstellt, worin

$R^3$ den Rest eines Homo- und/oder Copolymerisats einer ungesättigten Carbonsäure mit einer statistisch verteilten Anzahl von COOH-Seitengruppen oder den Rest eines Polyesters mit ursprünglich freien COOH-Gruppen und
Me ein Äquivalent eines in Salzform vorliegenden Alkali- oder Erdalkalimetalls

bedeuten.

2. Mischung nach Anspruch 1, dadurch gekennzeichnet, daß das Gesamtepoxydäquivalentgewicht der Komponente A) 80 bis 500, vorzugsweise 120 bis 300 beträgt und das Verhältnis von Gesamtepoxydäquivalenten der Komponente A) zu den freien COOH-Gruppen der Komponente B) 1 : 5 bis 5 : 1, vorzugsweise 0,5 : 1 bis 2 : 1 beträgt.

3. Mischung nach Anspruch 1 oder 2, dadurch gekennzeichnet, daß sie aliphatische und cycloaliphatische Epoxydverbindungen im Gewichtsverhältnis 1 : 10 bis 10 : 1 enthält.

4. Mischung nach einem oder mehreren der Ansprüche 1 bis 3, dadurch gekennzeichnet, daß die Komponente C) in einem solchen Anteil vorhanden ist, daß der Metallgehalt 0,02 bis 0,2 Äquivalent-%, bezogen auf die Komponente B), beträgt.

5. Mischung nach einem oder mehreren der Ansprüche 1 bis 4, dadurch gekennzeichnet, daß in Komponente C) gemäß Formel II $R^3$ ein Homo- und/oder Copolymerisat einer höchstens zweibasischen Carbonsäure mit 3 bis 5 C-Atomen mit einer Säurezahl von 10 bis 500, vorzugsweise 50 bis 300, darstellt.

6. Mischung nach einem oder mehreren der Ansprüche 1 bis 5, dadurch gekennzeichnet, daß die Komponente C) Lithium als salzbildendes Metall enthält.

7. Verfahren zur Herstellung gehärteter Produkte aus der Mischung nach einem oder mehreren der Ansprüche 1 bis 6, dadurch gekennzeichnet, daß die Mischung bei —30 bis 350° C, vorzugsweise 0 bis 180° C, gehärtet wird.

8. Verwendung der Komponente C) gemäß Anspruch 1 als Härter für ein Gemisch enthaltend die Komponenten A) und B) gemäß Anspruch 1 in Mischungen zur Herstellung von Beschichtungen.

9. Verwendung nach Anspruch 8 zur Herstellung von wetterbeständigen Lacken.

10. Verwendung nach Anspruch 9 zur Herstellung von Deckschichten, insbesondere für Metalleffektlackierungen.

**Claims**

1. Reactive hardenable binder mixture based on

A) aliphatic and/or cycloaliphatic epoxy compounds,
B) polycarboxylic units based on oligomeric and/or polymeric polymerisation and/or condensation product having initially free OH-groups of the group of polyester and polymers, which product being bound to a carboxylic polycarboxylic acid via an ester group in such a way that there is still a free COOH-group at the acid group in the o-position relative to this ester bond and
C) a catalyst compound in the form of alkali and/or alkaline earth metal salt,

characterized in that component

A) is present in the form of aliphatic and/or such cycloaliphatic polyepoxides, wherein at least two epoxidized cycloaliphatic groups are connected to each other via an aliphatic bridge which can contain at least one ester group or a ether oxygen,
B) a compound with an acid number of 30 to 400 of the formula

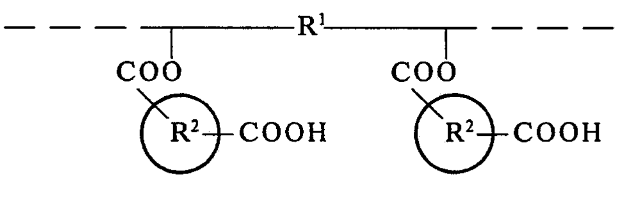

(I)

wherein

$R^1$ represents the group of a OH-groups containing polymerization and/or condensation product of the group of polyester and polymers and
$R^2$ represents the group of a dibasic carbocyclic carboxylic acid with a COOH-group in the o-position relative to the ester bond and,

C) a compound of the formula

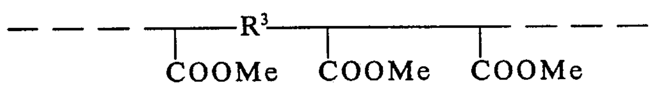

(II)

wherein

$R^3$ represents the group of a homo- and/or copolymer of an unsaturated carboxylic acid with a statistically distributed number of COOH-side groups or the group of a polyester with initially three COOH-groups and
Me represents an equivalent of an alkali or alkaline earth metal which is present as a cation.

2. Mixture according to claim 1, characterized in that the total epoxy equivalent weight of component A is 80 to 500, preferably 120 to 300 and the ratio of the total epoxy equivalents of compound A) to the free COOH-groups of component B is 1 : 5 to 5 : 1, preferably 0.5 : 1 to 2 : 1.

3. Mixture according to claim 1 or 2, characterized in that it contains aliphatic and cycloaliphatic epoxy compounds in a weight ratio 1 : 10 to 10 : 1.

4. Mixture according to one or more of the claims 1 to 3, characterized in that component C) is present in an amount such that the metal content is from 0.02 to 0.2 eqivalent-%, based on component B).

5. Mixture according to one or more of claims 1 to 4, characterized in that in component C) according to formula II, $R^3$ represents a homo- and/or copolymer of an at most dibasic carboxylic acid with 3 to 5 carbon atoms, having an acid number of from 10 to 500, preferably 50 to 300.

6. Mixture according to one or more of claims 1 to 5, characterized in that component C) contains Lithium as a salt-forming metal.

7. Process for preparing hardened products form the mixture according to one or more of the claims 1 to 6, characterized in that the mixture is hardened at a temperature of from —30 to 350° C, preferably 0 to 180° C.

8. Use of component C) according to claim 1 as a hardener for a mixture containing components A) and B) according to claim 1 in mixtures for the preparation of coatings.

9. Use according to claim 8 for the preparation of weather-resistant laquers.

10. Use according to claim 9 for the preparation of topcoating layers, particularly for metal effect coatings.

**Revendications**

1. Mélange liant réactif, durcissable, à base:

A) de composés époxydiques aliphatiques et/ou cycloaliphatiques,
B) de motifs d'acide polycarboxylique d'un produit de polymérisation et/ou de condensation oligomère et/ou polymère à groupes OH initialement libres, de la catégorie des polyesters et des polymères, lié par un groupe ester à un acide polycarboxylique carbocyclique de manière qu'il y ait encore, à la position ortho par rapport à la liaison ester, un groupe COOH libre sur le radical d'acide, et
C) d'une composante catalytique constituée de sels de métaux alcalins et/ou alcalino-terreux,

mélange caractérisé en ce que:

A) est constitué de polyépoxydes aliphatiques et/ou de polyépoxydes cycloaliphatiques dans lesquels au moins deux radicaux cycloaliphatiques époxydés sont reliés par un pont aliphatique pouvant comprendre au moins un groupement ester ou un oxygène d'éther,
B) est un composé ayant un indice d'acide de 30 à 400, de formule

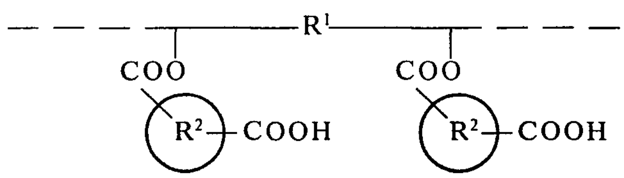

(I)

dans laquelle

$R^1$ représente le radical d'un produit de polymérisation et/ou de condensation à groupes OH, de la catégorie des polyesters et des polymères, et
$R^2$ le radical d'un acide dicarboxylique carboxyclique avec un groupe COOH en position ortho par rapport à la liaison ester, et

C) est un composé de formule

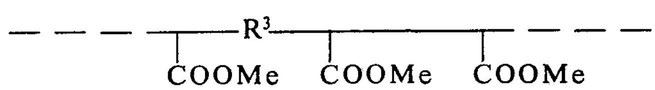

(II)

dans laquelle

$R^3$ représente le radical d'un homopolymère et/ou d'un copolymère d'un acide carboxylique insaturé à groupes COOH latéraux en répartition statique (aléatoire), ou le radical d'un polyester à groupes COOH initialement libres, et
Me un équivalent d'un métal alcalin ou alcalino-terreux sous la forme d'un sel.

2. Mélange selon la revendication 1, caractérisé en ce que le poids équivalent d'époxyde total de la composante A) est de 80 à 500, de préférence de 120 à 300, et le rapport de la totalité des équivalents époxydiques de la composante A) aux groupes COOH libres de la composante B) est comprise entre 1 : 5 et 5 : 1, de préférence entre 0,5 : 1 et 2 : 1.

3. Mélange selon la revendication 1 ou 2, caractérisé en ce qu'il contient les composé époxydiques aliphatiques et cycloaliphatiques dans un rapport pondéral compris entre 1 : 10 et 10 : 1.

4. Mélange selon une ou plusieurs des revendications 1 à 3, caractérisé en ce que la proportion de la composante C) est telle que la teneur en métal soit de 0,02 à 0,2%, en équivalents, par rapport à la composante B).

5. Mélange selon une ou plusieurs des revendications 1 à 4, caractérisé en ce que dans la composante C) de formule II $R^3$ est le radical d'un homopolymère et/ou d'un copolymère d'un acide carboxylique en $C_3$ à $C_5$ ayant au maximum deux groupes carboxyliques, dont l'indice d'acide est compris entre 10 et 500, de préférence entre 50 et 300.

6. Mélange selon une ou plusieurs des revendications 1 à 5, caractérisé en ce que la composante C) contient du lithium comme métal salifié.

7. Procédé de préparation de produits durcis à partir d'un mélange selon une ou plusieurs des revendications 1 à 6, procédé caractérisé en ce que l'on durcit le mélange entre −30 et 350°C, de préférence entre 0 et 180°C.

8. L'utilisation de la composante C) selon la revendication 1 comme durcisseur d'un mélange comprenant les composantes A) et B) selon la revendication 1, dans des mélanges pour la formation de revêtements.

9. Utilisation selon la revendication 8 pour la préparation de vernis résistant aux agents atmosphériques et intempéries.

10. Utilisation selon la revendication 9 pour la formation de couches de recouvrement, en particulier de vernis à effet métallisé.

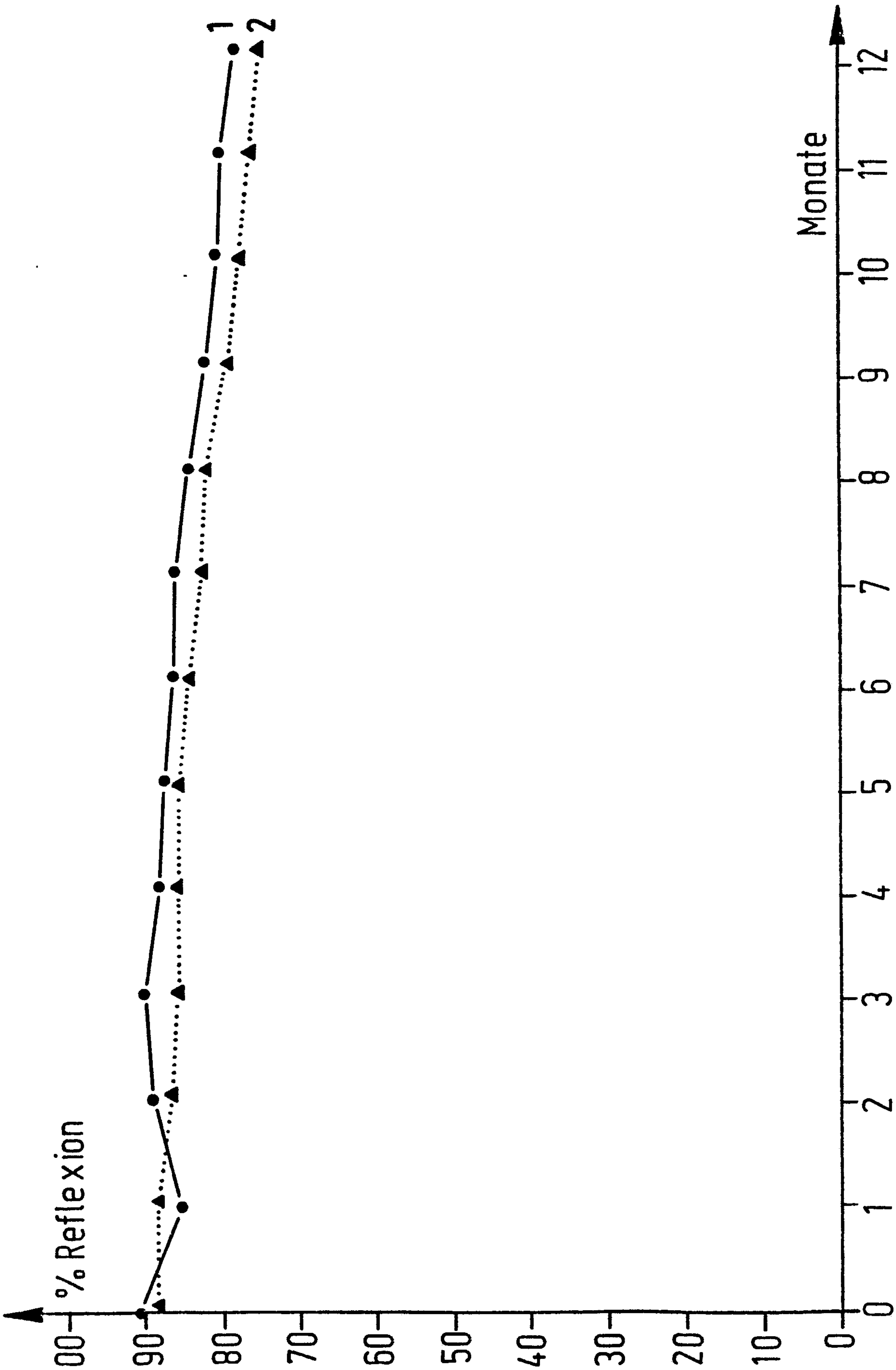
% Reflexion
100
90
80
70
60
50
40
30
20
10
0
Monate
0
1
2
3
4
5
6
7
8
9
10
11
12
1
2